# EUROPEAN PATENT APPLICATION

(11) **EP 4 664 937 A1**
(43) Date of publication of application: **17.12.2025**
(21) Application number: 23922519.6
(22) Date of filing: 22.12.2023
(51) Int. Cl.: H04W 4/14

(54) **CALL INITIATION PROCESSING METHOD AND APPARATUS, ELECTRONIC DEVICE AND STORAGE MEDIUM**

(30) Priority: 13.02.2023 CN 202310136877
(71) Applicant: ZTE CORPORATION, Shenzhen, Guangdong 518057 (CN)
(72) Inventor: PENG, Jiaoyang, Shenzhen, Guangdong 518057 (CN); ZHANG, Pengfei, Shenzhen, Guangdong 518057 (CN); GENG, Changjian, Shenzhen, Guangdong 518057 (CN)
(74) Representative: Ziebig Hengelhaupt Intellectual Property Attorneys Patentanwaltskanzlei PartGmbB
(86) International application number: PCT/CN2023/141173
(87) International publication number: WO 2024/169404

(57) **Abstract**

The present application provides a call initiation processing method and apparatus, an electronic device and a storage medium. The method comprises: receiving a call initiation message sent by a UE, wherein the call initiation message indicates a call initiation S-CSCF and an S-CSCF address of the call initiation S-CSCF; if an S-CSCF address registered by the UE is not stored locally, and the success rate of a delivery message for the call initiation S-CSCF indicated by the call initiation message reaches a first preset threshold, determining the S-CSCF address of the call initiation S-CSCF as the S-CSCF address registered by the UE; if the S-CSCF address registered by the UE is not stored locally, and the success rate of the delivery message for the call initiation S-CSCF does not reach the first preset threshold, determining an S-CSCF address of an S-CSCF associated with the UE in subscription information of an HSS as the S-CSCF address registered by the UE; and according to the S-CSCF address registered by the UE, delivering a response message corresponding to the call initiation message.

## Description

### CROSS REFERENCE TO RELATED APPLICATIONS

This application claims priority to Chinese Patent Application No. 202310136877.2 filed on February 13, 2023, entitled "Call initiation processing method and apparatus, electronic device and storage medium", the entirety of which is incorporated herein by reference.

### TECHNICAL FIELD

The present application relates to the technical field of communications, and in particular to a call initiation processing method and apparatus, an electronic device and a storage medium.

### BACKGROUD

With widespread use of IP networks, IP short messages have become one of telecommunication service requirements. Intercommunication between IP short messages and circuit-domain short messages can be achieved by introducing an IP-Short-Message-Gateway (IP-SM-GW).

A current call initiation processing method of IP-SM-GW includes that: a calling user equipment (UE) sends a call initiation message to a home serving-call session control function (S-CSCF). After the call initiation message is received, if detecting that a primary IP-SM-GW is normal, the home S-CSCF forwards the call initiation short message to the primary IP- SM-GW, and then the primary IP-SM-GW delivers the call initiation message downstream based on an S-CSCF address (IP/PORT address) registered by the calling UE, such that an S-CSCF that receives the call initiation message further performs call initiation processing; if detecting that the primary IP-SM-GW is abnormal, the home S-CSCF forwards the call initiation short message to a standby IP-SM-GW, and the standby IP-SM-GW delivers the call initiation message downstream based on an S-CSCF address registered by the calling UE. In addition, if the primary/standby IP-SM-GW receives the call initiation message but there is no registration cache for the calling UE, the call initiation message is delivered downstream by using an S-CSCF address of a call initiation S-CSCF.

In some cases, due to the fact that uplink and downlink listening ports of part manufacturers are inconsistent and the IP-SM-GW fails to obtain the S-CSCF address of the call initiation S-CSCF during reconstruction of registration information, delivery of the call initiation message by using the S-CSCF address of the call initiation S-CSCF by the IP-SM-GW tends to fail.

Therefore, a technical solution that can be used to improve the robustness of IP-SM-GW call initiation is needed.

### SUMMARY

The purpose of the present application is to provide a call initiation processing method and apparatus, an electronic device and a storage medium.

In order to achieve the above-mentioned purpose, the embodiments of the present application are implemented as follows:

In a first aspect, there is provided a call initiation processing method, the method includes: receiving a call initiation message sent from a UE, wherein the call initiation message indicates a call initiation S-CSCF and an S-CSCF address of the call initiation S-CSCF; if an S-CSCF address registered by the UE is not stored locally and a success rate of delivering a message by the call initiation S-CSCF indicated by the call initiation message reaches a first preset threshold, determining the S-CSCF address of the call initiation S-CSCF as the S-CSCF address registered by the UE, or if the S-CSCF address registered by the UE is not stored locally and a success rate of delivering a message by the call initiation S-CSCF does not reach a first preset threshold, determining an S-CSCF address of an associated S-CSCF in subscription information of the UE in an HSS as the S-CSCF address registered by the UE; and delivering a response message corresponding to the call initiation message according to the S-CSCF address registered by the UE.

In a second aspect, there is provided a call initiation processing apparatus, the apparatus includes: a receiving module, configured to receive a call initiation message from a UE, wherein the call initiation message indicates a call initiation S-CSCF and an S-CSCF address of the call initiation S-CSCF; a registration module, configured to determine, if an S-CSCF address registered by the UE is not stored locally and a success rate of delivering a message by the call initiation S-CSCF indicated by the call initiation message reaches a first preset threshold, the S-CSCF address of the call initiation S-CSCF as the S-CSCF address registered by the UE, or configured to determine, if the S-CSCF address registered by the UE is not stored locally and a success rate of delivering a message by the call initiation S-CSCF does not reach a first preset threshold, an S-CSCF address of an associated S-CSCF in subscription information of the UE in an HSS as the S-CSCF address registered by the UE; and a delivering module configured to deliver a response message corresponding to the call initiation message according to the S-CSCF address registered by the UE.

### BRIEF DESCRIPTION OF THE DRAWINGS

In order to more clearly illustrate the technical solutions in the embodiments of the present application or in the prior art, the drawings required for use in the description of the embodiments or the prior art will be briefly introduced below, obviously, the drawings described below are only some embodiments described in the present application, and other drawings can be obtained by those skilled in the art based on these drawings without involving creative work.
FIG. 1 is a first schematic flow chart of a call initiation processing method according to embodiments of the present application.
Fig. 2 is a schematic diagram of modules divided based on functions of a call initiation processing method according to embodiments of the present application.
FIG. 3 is a schematic flow chart of a call initiation processing method in some cases.
FIG. 4 is a second schematic flow chart of a call initiation processing method according to embodiments of the present application.
FIG. 5 is a first schematic diagram of delivery decision in a call initiation processing method according to embodiments of the present application.
FIG. 6 is a third schematic flow chart of a call initiation processing method according to embodiments of the present application.
FIG. 7 is a fourth schematic flow chart of a call initiation processing method according to embodiments of the present application.
FIG. 8 is a second schematic diagram of performing delivery decision in a call initiation processing method according to embodiments of the present application.
FIG. 9 is a schematic structural diagram of a call initiation processing apparatus according to embodiments of the present application.
FIG. 10 is a schematic structural diagram of an electronic device according to embodiments of the present application.

### DETAILED DESCRIPTION

In order to enable those skilled in the art to better understand the technical solutions in the specification, technical solutions in embodiments of the application will be described clearly and thoroughly below with reference to the accompanying drawings in embodiments of the application. Obviously, the embodiments described are part of the embodiments of the specification rather than all of the embodiments. All other embodiments obtained by those skilled in the art without creative work based on embodiments in the present specification shall fall within the scope of the present specification.

As mentioned above, there is uplink and downlink monitoring ports of some manufacturers are inconsistent, which causes frequent failure when part of IP-SM-GWs delivers a call initiation message by using an S-CSCF address of the call initiation S-CSCF. An IP-SM-GW delivers a call initiation message by using an S-CSCF address of a call initiation S-CSCF in the following three scenarios.

In a first scenario, when a primary IP-SM-GW is abnormal, a serving-call session control function (S-CSCF) detects that the primary IP-SM-GW is abnormal and transfers a call initiation short message to a standby IP-SM-GW, and the standby IP-SM-GW does not have registration information of a calling UE (an S-CSCF address registered by the UE). Since the call initiation carries IP/PORT of a call initiation S-CSCF, the standby IP-SM-GW may deliver a RPACK message (a call initiation message delivered by the IP-SM-GW is a RPACK message) by the IP/PORT of the call initiation S-CSCF.

In a second scenario, a primary IP-SM-GW is normal, but the local registration information for a calling UE is lost, the call initiation message carries IP/PORT of the call initiation S-CSCF, so that a primary IP-SM-GW may issue a call initiation RPACK message by the IP/PORT of the call initiation S-CSCF.

In a third scenario, the local registration information for a calling UE is lost or disaster recovery occurs, when receiving call initiation information, an IP-SM-GW reconstructs registration information and delivers a call initiation RPACK according to the IP/PORT of a call initiation S-CSCF in the registration information.

For the first and second scenarios, uplink and downlink monitoring ports of some manufacturers are inconsistent, which causes an IP-SM-GW fail to deliver a RPACK message by using a call initiation S-CSCF. In the third scenario, the IP/PORT of the call initiation S-CSCF cannot be acquired when the registration information is reconstructed, resulting in a failure in delivering the RPACK message.

With development in the 5G era, service providers have higher and higher requirements for the robustness of a short message system, in view of this, the present application is intended to improve the robustness of IP-SM-GW call initiation and to provide a call initiation processing method that can ensure normal sending and receiving of 4G/5G short messages when call initiation registration information is abnormal.

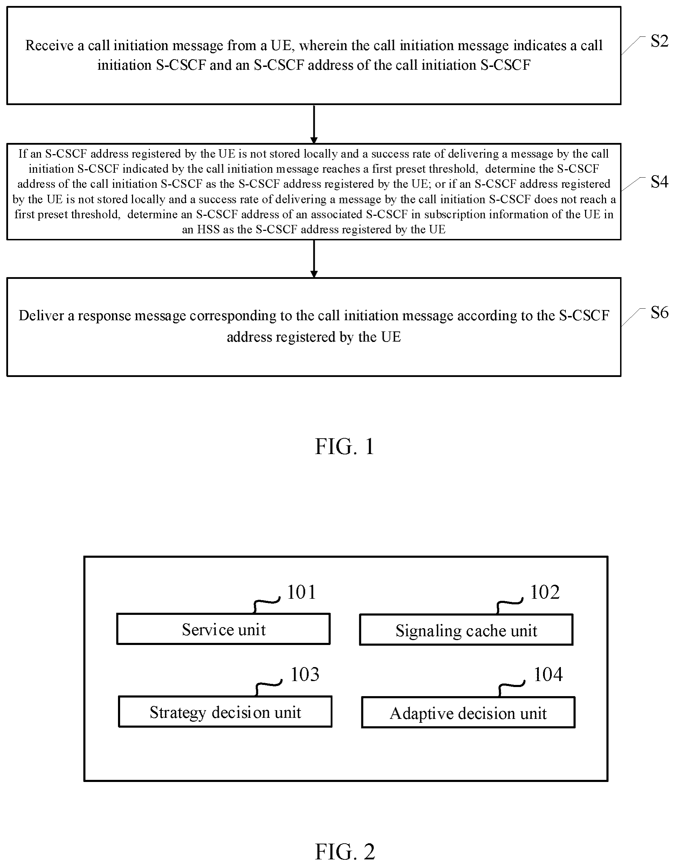

In one aspect, an embodiment of the present application provides a call initiation processing method performed by an IP-SM-GW. FIG. 1 is a schematic flow chart of a call initiation processing method according to an embodiment of the present application, it includes the following steps.

At S2, a call initiation message from a UE is received, wherein the call initiation message indicates a call initiation S-CSCF and an S-CSCF address of the call initiation S-CSCF.

In an embodiment of the present application, a UE may send a call initiation message to an IP-SM-GW by a home S-CSCF of the UE, wherein the IP-SM-GW that receives the call initiation message may be a primary IP-SM-GW or a standby IP-SM-GW, which is not specifically limited herein.

As mentioned above, a call initiation message may carry an S-CSCF address of a call initiation S-CSCF, and the S-CSCF address may include, but is not limited to, an IP address and/or PORT address of the S-CSCF.

At S4, if an S-CSCF address registered by the UE is not stored locally and the success rate of delivering a message by the call initiation S-CSCF indicated by the call initiation message reaches a first preset threshold, then the S-CSCF address of the call initiation S-CSCF is determined as the S-CSCF address registered by the UE; or if an S-CSCF address registered by the UE is not stored locally and a success rate of delivering a message by the call initiation S-CSCF does not reach a first preset threshold, then an S-CSCF address of an associated S-CSCF in subscription information of the UE in a home subscriber server (HSS) is determined as the S-CSCF address registered by the UE.

In some cases, after receiving the call initiation message, the IP-SM-GW forwards the call initiation message to a Short Message Service Center (SMSC), and the SMSC performs authentication. Afterwards, the SMSC feeds back an authentication result to the IP-SM-GW, the IP-SM-GW encapsulates the result into an RPACK message (one type of response message corresponding to the call initiation message) and delivers the same to the S-CSCF registered by the UE, such that the registered S-CSCF may further feed back the RPACK message to the UE.

That the IP-SM-GW does not store the S-CSCF address registered by the UE means that the IP-SM-GW does not locally store a currently valid S-CSCF address registered by the UE, which may be caused by primary-standby switching after disaster recovery, device failure, reconstruction of registration information or expiration of a registered S-CSCF address, etc.

For embodiments of the present application, when the IP-SM-GW receives the calling message from the UE, and if the S-CSCF address registered by the UE is not stored locally, the registration information of the UE needs to be updated, so as to determine one S-CSCF address as the S-CSCF address registered by the UE.

In an embodiment of the present application, the IP-SM-GW may use an S-CSCF address of the call initiation S-CSCF as the S-CSCF address registered by the UE.

In some cases, the IP-SM-GW may record results of previous message delivery of the call initiation S-CSCF. When the IP-SM-GW receives the call initiation message sent by the UE, and if the S-CSCF address registered by the UE is not stored locally, the success rate of delivering a message by the call initiation S-CSCF is determined based on the results of previous message delivery of the call initiation S-CSCF.

If the success rate of delivering a message by the call initiation S-CSCF reaches a first preset threshold, the condition that uplink and downlink monitoring ports are inconsistent may usually be ruled out, as a result, the call initiation S-CSCF may be selected to process a call initiation message, and then the S-CSCF address of the call initiation S-CSCF indicated by the call initiation message is determined as the S-CSCF address registered by the UE.

If the success rate of delivering a message by the call initiation S-CSCF does not reach a first preset threshold, an S-CSCF address of an associated S-CSCF (which is not the call initiation S-CSCF) in subscription information of the UE in an HSS is determined as the S-CSCF address registered by the UE.

Several implementation methods for determining an S-CSCF address from subscription information of an HSS are illustrated below.

Implementation method 1: an S-CSCF address is determined based on S-CSCF information in subscription information of an HSS.

Firstly, an IP-SM-GW determines an S-CSCF NAME associated with the UE from subscription information of the UE in the HSS,

Then the IP-SM-GW queries a DNS for an S-CSCF address corresponding to the S-CSCF NAME, wherein the queried S-CSCF address is used as an S-CSCF address of the associated S-CSCF from the subscription information of the UE.

Implementation method 2: an S-CSCF address is determined based on I-CSCF information in subscription information of an HSS.

Firstly, a user identifier USERURI corresponding to the UE is acquired from subscription information of the UE in the HSS.

Then, an I-CSCF NAME is obtained based on a manner of a preset prefix plus a USERURI suffix. It should be noted that the naming rule of an I-CSCF NAME is fixed and will not be described in detail herein.

Finally, a DNS is queried for an S-CSCF address of an S-CSCF belonging to one I-CSCF NAME group in an I-CSCF POOL, for example, a DNS is queried for an S-CSCF address of an S-CSCF with the highest priority, wherein the S-CSCF address obtained by query is used as an S-CSCF address of the associated S-CSCF from the subscription information of the UE.

Implementation method 3: in some cases, an S-CSCF address is determined based on S-CSCF information in subscription information of an HSS; alternatively, an S-CSCF address is determined based on I-CSCF information in subscription information of an HSS.

Firstly, an S-CSCF NAME associated with the UE and a USERURI corresponding to the UE are acquired from subscription information of the UE in the HSS.

Then, whether the success rate of delivering a message by the S-CSCF associated with the UE reaches a second preset threshold is determined.

If the success rate of delivering a message by the S-CSCF associated with the UE reaches the second preset threshold, a DNS is queried for an S-CSCF address of an S-CSCF associated with the UE, wherein the queried S-CSCF address is used as an S-CSCF address of the associated S-CSCF from the subscription information of the UE.

If the success rate of delivering a message by the S-CSCF associated with the UE does not reach the second preset threshold, an I-CSCF NAME associated with the UE is determined based on the USERURI, and a DNS is queried for an S-CSCF address of an S-CSCF belonging to one I-CSCF NAME group in an I-CSCF POOL, wherein the queried S-CSCF address is used as the S-CSCF address of the associated S-CSCF from the subscription information of the UE.

At S6, a response message corresponding to the call initiation message is delivered.

In this step, after newly determining an S-CSCF address registered by the UE, the IP-SM-GW delivers the response message downstream according to the registered S-CSCF address. Correspondingly, the S-CSCF that receives the response message further delivers the response message to the UE.

In addition, after the delivering the call initiation message, the IP-SM-GW may also track and record whether the corresponding S-CSCF succeeds in delivering the response message to the UE (the S-CSCF feeds back a delivery result to the IP-SM-GW), thereby dynamically updating the success rate of delivering a message by the S-CSCF.

After the IP-SM-GW receives the call initiation message sent by the UE, if it is determined that the S-CSCF address registered by the UE is not stored locally, then the success rate of delivering a message by the call initiation S-CSCF is determined. If the success rate of delivering a message by the call initiation S-CSCF reaches a first preset threshold, the problem of inconsistency between uplink and downlink monitoring ports can be ruled out, then the S-CSCF address of the call initiation S-CSCF indicated by the call initiation message is determined as the S-CSCF address registered by the UE, such that the call initiation S-CSCF is responsible for delivering a response message corresponding to the call initiation message. If the success rate of delivering a message by the call initiation S-CSCF reaches a second preset threshold, the S-CSCF address of another associated S-CSCF in subscription information of the UE in an HSS is determined as the S-CSCF address registered by the UE, such that the other associated S-CSCF is responsible for delivering a response message corresponding to the call initiation message. The solution of embodiments of the present application can be used to ensure normal call initiation of 4G/5G short messages when the registration information of the primary IP-SM-GW is abnormal, as well as in a process of switching between the primary and standby IP-SM-GWs, thereby improving the robustness of call initiation of an IP-SM-GW.

Based on description of the above solutions, a primary/standby IP-SM-GW in embodiments of the present application receives a call initiation message, and determines whether there is registration information of the UE when returning a call initiation RPACK message to the UE. If there is no registration information or the registration information is invalid, the following strategies may be selected to deliver a response message corresponding to the call initiation message.

Strategy 1: the IP/PORT of a call initiation S-CSCF is used for delivery.

Strategy 2: an S-CSCF HOST and USERURI to which a calling user belongs are obtained by initiating a relevant signaling request to the HSS. The S-CSCF HOST is used to query an IP/PORT by DNS. If information acquisition fails, an IP/PORT of a call initiation S-CSCF is used for delivery. Then, registration information of the UE is updated.

Strategy 3: an S-CSCF HOST and USERURI to which the calling user belongs are obtained by initiating a relevant signaling request to the HSS, the I-CSCF domain name is constructed by using a preset prefix plus USERURI suffix, the IP/PORT is queried by DNS, an if information acquisition fails, an IP/PORT of a call initiation S-CSCF is used for delivery. Then, the registration information of the UE is updated.

Strategy 4: the IP/PORT of a call initiation S-CSCF is preferably used for delivery, if the success rate of delivery of the call initiation S-CSCF is lower than a preset first threshold, Strategy 2 is switched; and if the success rate of delivery of the S-CSCF corresponding to strategy 2 is lower than a second threshold, strategy 3 is switched to. Then, registration information of the UE is updated.

The call initiation processing method according to embodiments of the present application is described in detail below.

Referring to FIG. 2, the call initiation processing method according to embodiments of the present application, which is divided based on functions, mainly includes the following modules 101 to 104.

A service unit 101 is configured to complete encoding and decoding adaptation with MAP protocol, SIP protocol, and Dimeter protocol, so as to achieve intercommunication with external network elements.

A signaling cache unit 102 is configured to store registration information of third-party users for IMS-domain delivery.

A strategy decision unit 103 is configured to perform routing selection when delivering a call initiation RPACK message.

An adaptive decision unit 104 is configured to perform intelligent routing selection when delivering a call initiation RPACK message.

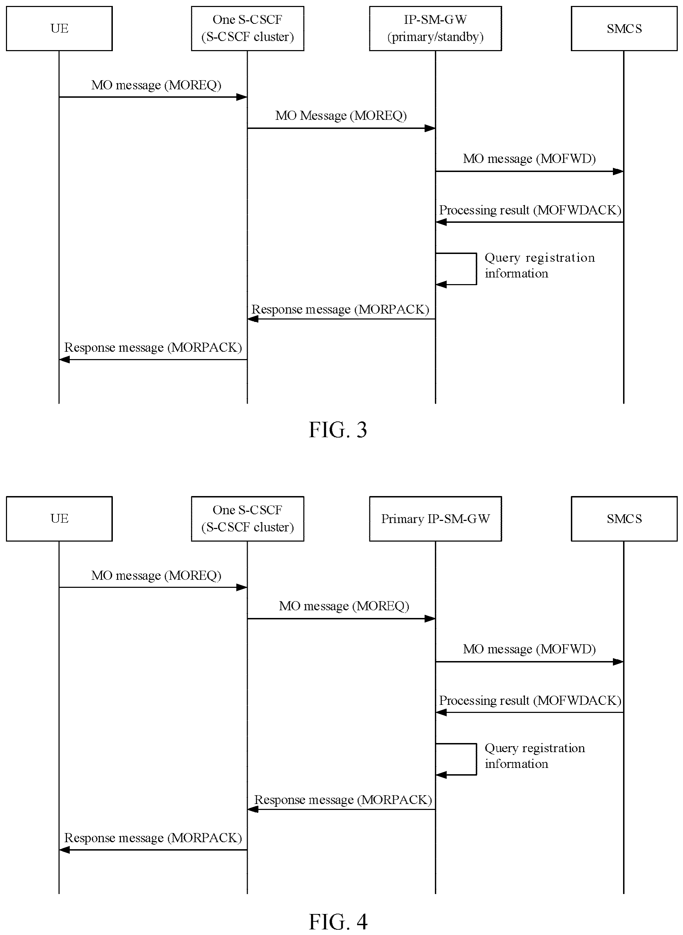

FIG. 3 is a schematic diagram of a traditional call initiation process in which there is no registration information of the UE, or there is registration information but the IP/PORT of a call initiation S-CSCF is invalid.

Based on the process shown in FIG. 3, the process for the scenario in which a primary IP-SM-GW has no registration information of the UE includes the following.
1. The UE sends an MO message (MOREQ) to a home S-CSCF, upon the condition that the home S-CSCF detects that a primary IP-SM-GW is normal, the MO message is forwarded to the primary IP-SM-GW.
2. The primary IP-SM-GW forwards the MO message (MOFWD) to a short message service center (SMSC) for authentication-related processing.
3. The SMSC feeds back message carrying a processing result (MORPACK) to the primary IP-SM-GW.
4. The primary IP-SM-GW delivers the RPACK message (MORPACK) to one S-CSCF according to the processing result returned by the SMSC. In some cases, the primary IP-SM-GW finds that there is no registration information of the UE before delivery, and delivers the PACK message by using the IP/PORT of the call initiation S-CSCF. Uplink and downlink monitoring ports of some manufacturers are inconsistent, which causes that the primary IP-SM-GW fails to deliver the RPACK message by using the call initiation S-CSCF.

Based on the process shown in FIG. 3, the process for the scenario in which a primary IP-SM-GW switches to a standby IP-SM-GW due to a failure, but the IP-SM-GW does not have the registration information of the UE is as followed.
1. The UE sends an MO message to a home S-CSCF, upon the condition that the home S-CSCF detects that a primary IP-SM-GW is abnormal, the home S-CSCF forwards the MO message to a standby IP-SM-GW for disaster recovery.
2. The standby IP-SM-IPSMGW forwards the MO message to a short message service center (SMSC) for authentication-related processing.
3. The SMSC feeds back a message carrying a processing result to the standby IP-SM-GW.
4. The standby IP-SM-GW delivers the RPACK message to one S-CSCF according to the processing result returned by the SMSC. In some cases, the standby IP-SM-GW finds that there is no registration information of the UE before delivery, and delivers the PACK message by using an IP/PORT of the call initiation S-CSCF. Uplink and downlink monitoring ports of some manufacturers are inconsistent, which causes that the standby IP-SM-GW fails to deliver a RPACK message by using the call initiation S-CSCF.

Based on the process shown in FIG. 3, the process for the scenario in which a primary IP-SM-GW switches to a standby IP-SM-GW due to a failure, and the standby IP-SM-GW firstly receives a call termination for reconstruction of registration information, which causes the call initiation S-CSCF IP/PORT to be invalid is as followed.
1. The SMSC initiates SRI routing query before making call termination to the standby IP-SM-GW, when receiving the SRI, the standby IP-SM-GW finds that there is no registration information of the UE locally by querying an HSS (the HSS has no IP/PORT information), and reconstructs the registration information of the UE.
2. The UE sends an MO message to a home S-CSCF, upon the condition that the home S-CSCF detects that the primary IP-SM-GW is abnormal, the home S-CSCF forwards the MO message to the standby IP-SM-GW for disaster recovery.
3. The standby IP-SM-GW forwards the MO message to a short message service center (SMSC) for authentication-related processing.
4. The SMSC feeds back a message carrying a processing result to the standby IP-SM-GW.
5. The standby IP-SM-GW delivers the RPACK message to one S-CSCF according to the result returned by the SMSC. When it is found there is registration information of the UE by query before delivery, an IP/PORT of the call initiation S-CSCF in the registration information is used for delivery (invalid), the delivery of the RPACK fails.

Correspondingly, based on the solution according to embodiments of the present application, the process for a scenario in which a primary IP-SM-GW has no registration information of the UE is shown in FIG. 4 is as followed.
1. The UE sends an MO message to a home S-CSCF, upon the condition that the home S-CSCF detects that the primary IP-SM-GW is normal, the home S-CSCF forwards the MO message to the primary IP-SM-GW.
2. The primary IP-SM-GW forwards the MO message to a short message service center (SMSC) for authentication-related processing.
3. The SMSC feeds back a message carrying a processing result to the primary IP-SM-GW.
4. The primary IP-SM-GW delivers the RPACK message to one S-CSCF according to the result returned by the SMSC.

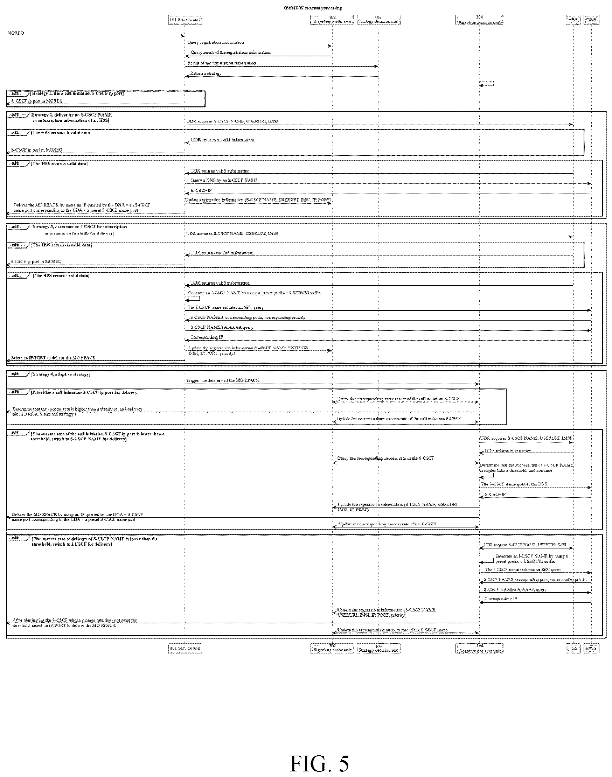

The delivery strategy as shown in FIG. 5, includes the following.

5.1, the service unit 101 triggers the signaling cache unit 102 to query for registration information.

5.2, the service unit 101 determines and carries a query result of the registration information, and triggers the strategy decision unit 103 to make a decision.

5.3, the strategy decision unit 103 returns a strategy according to a preset strategy, and the service unit 101 performs further processing according to the strategy. The strategy processing includes 5.3.1 to 5.3.4.

In 5.3.1, i.e., strategy 1, an MO RPACK is delivered by using an IP/PORT of a call initiation S-CSCF.

In 5.3.2, i.e., strategy 2, an MO RPACK is delivered by using an S-CSCF NAME in subscription information of an HSS.
a. The service unit 101 sends a UDR signaling to a HSS, so as to request for an S-CSCF NAME, USERURI, and IMSI of a user.
b. Upon the condition that the HSS returns invalid data, the service unit 101 delivers the MO RPACK by using the IP/PORT of the call initiation S-CSCF.
c. Upon the condition that the HSS returns valid data, the service unit 101 queries a DNS for an IP by using a UDA S-CSCF NAME, and the service unit 101 uses the IP/PORT obtained by query for delivery. The PORT in a UDA response is preferentially, if there is no PORT in the UDA response, a PORT corresponding to a preset S-CSCF NAME is used. The service unit 101 synchronously updates registration information (S-CSCF NAME, USERURI, IMSI, IP, PORT, etc.) to the signaling cache unit 102.

In 5.3.3, i.e., strategy 3, MO RPACK is delivered by constructing I-CSCF from subscription information of an HSS.
a. The service unit 101 sends a UDR signaling to the HSS, so as to request for an S-CSCF NAME, USERURI, and IMSI of a user.
b. Upon the condition that the HSS returns invalid data, the service unit 101 deliver the MO RPACK by using an IP/PORT of the call initiation S-CSCF.
c. Upon the condition that the HSS returns valid data, the service unit 101 generates the I-CSCF NAME by using preset prefix plus UDA USERURI suffix, the service unit 101 initiates an SRV query to a DNS for the priority of a PORT corresponding to the S-CSCF NAME belonging to the I-CSCF, the service unit 101 initiates an A/AAAA query to the DNS for an IP corresponding to the S-CSCF NAME, and the service unit 101 updates the registration information (S-CSCF NAME, USERURI, IMSI, IP, and PORT priority) to the signaling cache unit 102.
d. The service unit 101 selects an IP/PORT for delivery, and the rule of strategy selection is as follows: higher priority takes precedence, IPV6 is preferred for the same priority, and round-robin for the same type.

In 5.3.4, i.e., strategy 4, adaptive delivery: the adaptive decision unit 104 prioritizes an IP/PORT of a call initiation S-CSCF for delivery, it is switched to an S-CSCF NAME for delivery when the success rate of delivery is lower than a preset threshold, and it is switched to an I-CSCF for delivery when the success rate of delivery of a corresponding S-CSCF NAME is lower than a threshold again.
a. The service unit 101 triggers the adaptive decision unit 104 to deliver an MO RPACK.
b. The adaptive decision unit 104 prioritizes an IP/PORT of a call initiation S-CSCF for delivery, before delivery, the adaptive decision unit 104 queries the signaling cache unit 102 for the corresponding success rate of the call initiation S-CSCF, if it is higher than a threshold, delivery is performed directly and the success rate is updated according to the delivery result. Otherwise, it is switched to an S-CSCF NAME for delivery, that is, the process c.
c. Delivery is performed based on an S-CSCF NAME.
c1. The adaptive decision unit 104 sends a UDR signaling to the HSS, so as to request an S-CSCF NAME, USERURI, and IMSI of a user.
c2. If the request for UDR data is successful, the adaptive decision unit 104 queries the signaling cache unit 102 for the corresponding success rate according to the UDA response S-CSCF NAME, if the requirement is met, the adaptive decision unit 104 queries a DNS according to the S-CSCF NAME to acquire an IP; or if the success rate does not meet the requirement, it is switched to the process d.
c3. The adaptive decision unit 104 updates registration information (S-CSCF NAME, USERURI, IP, PORT) to the signaling cache unit 102.
c4. The adaptive decision unit 104 uses the IP/PORT obtained by query for delivery. The PORT in a UDA response is preferentially used, if there is no PORT in the UDA response, a PORT corresponding to a preset S-CSCF NAME is used.
c5. The adaptive decision unit 104 updates the corresponding success rate of an S-CSCF-NAME according to the delivery result.
c6. If query for UDA information fails, the process is ended.
d. Delivery is performed based on an I-CSCF NAME.
d1. The adaptive decision unit 104 sends a UDR signaling to the HSS, so as to request an S-CSCF NAME, USERURI, and IMSI of a user.
d2. The process is ended when the HSS returns invalid data.
d3. Upon the condition that the HSS returns valid data, the adaptive decision unit 104 generates an I-CSCF NAME by using preset prefix plus UDA USERURI suffix, the adaptive decision unit 104 initiates an SRV query to a DNS for the priority of a PORT corresponding to the S-CSCF NAME belonging to the I-CSCF, the adaptive decision unit 104 initiates an A/AAAA query to the DNS for an IP corresponding to the S-CSCF NAME, and the adaptive decision unit 104 updates the registration information (S-CSCF NAME, USERURI, IMSI, IP, and PORT priority) to the signaling cache unit 102.
d4. The adaptive decision unit 104 selects an IP/PORT for delivery, and the rule of strategy selection is as follows: higher priority takes precedence, IPV6 is preferred for the same priority, and round-robin for the same type.
d5. The adaptive decision unit 104 updates the corresponding success rate of an S-CSCF-NAME according to the delivery result.

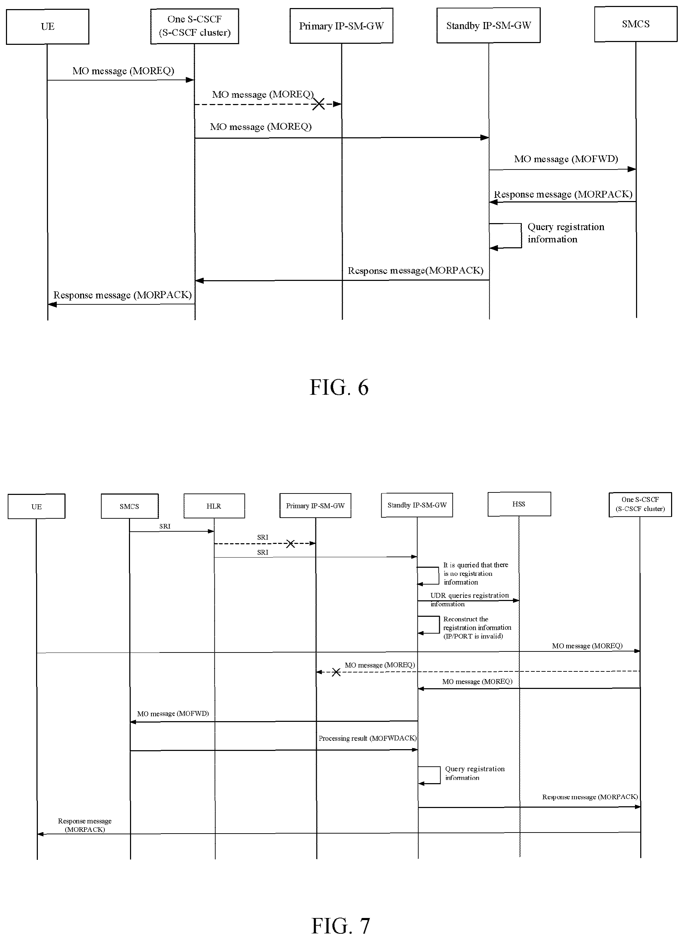

Correspondingly, referring to FIG. 6, based on the solution according to embodiments of the present application, the process for a scenario in which a primary IP-SM-GW switches to a standby IP-SM-GW due to a failure, but the IP-SM-GW has no registration information of the UE includes the following.
1. The UE sends an MO message to a home S-CSCF, upon the condition that the home S-CSCF detects that the primary IP-SM-GW is abnormal, the home S-CSCF forwards the MO message to the standby IP-SM-GW for disaster recovery.
2. The standby IP-SM-GW forwards the MO message to a short message service center (SMSC) for authentication-related processing.
3. The SMSC feeds back a message carrying a processing result to the standby IP-SM-GW.
4. The standby IP-SM-GW delivers a RPACK message to one S-CSCF according to the processing result returned by the SMSC. In some cases, the standby IP-SM-GW finds that there is no registration information by query before delivery, then it delivers the RPACK message by using the strategy shown in FIG. 5, which will not be described in detail herein.

Correspondingly, referring to FIG. 7, based on the solution according to embodiments of the present application, the process for the scenario in which a primary IP-SM-GW switches to a standby IP-SM-GW due to a failure, and the standby IP-SM-GW firstly receives a call termination for reconstruction of registration information, which causes an IP/PORT of a call initiation S-CSCF to be invalid includes the following.
1. An SMSC initiates an SRI routing query before making the call termination to the standby IP-SM-GW, upon the condition that the standby IP-SM-GW receives the SRI, it finds that there is no registration information of the UE locally(the HSS has no IP/PORT information), and reconstructs the registration information of the UE after querying an HSS.
2. The UE sends an MO message to a home S-CSCF, upon the condition that the home S-CSCF detects that the primary IP-SM-GW is abnormal, it forwards the MO message to the standby IP-SM-GW for disaster recovery.
3. The standby IP-SM-GW forwards the MO message to a short message service center (SMSC) for authentication-related processing.
4. The SMSC feeds back a message carrying a processing result to the standby IP-SM-GW, and the standby IP-SM-GW delivers the RPACK message to one S-CSCF according to the result returned by the SMSC.

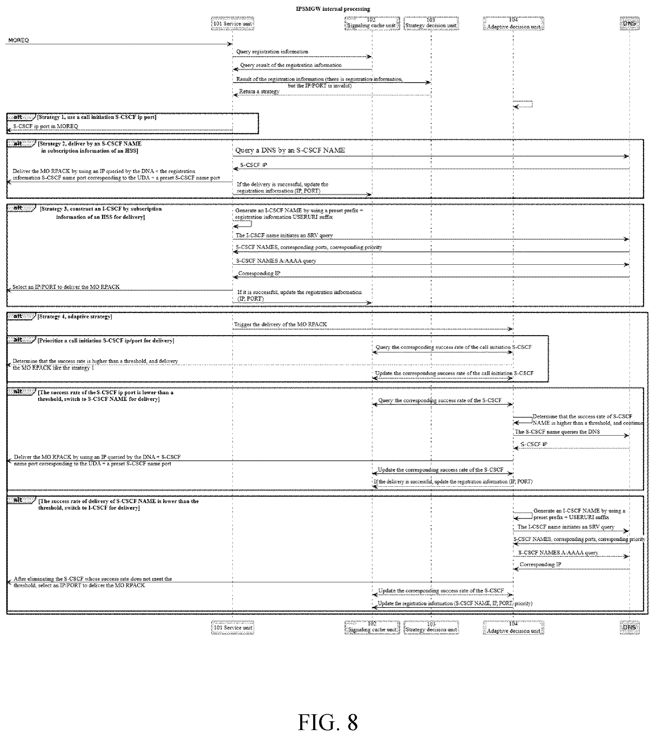

The delivery strategy is shown in FIG. 8, which includes the following.

8.1. The service unit 101 triggers the signaling cache unit 102 to query registration information.

8.2. The service unit 101 determines and carries a query result of the registration information (there is registration information, but the IP/PORT is invalid), and triggers the strategy decision unit 103 to make a decision.

8.3. The strategy decision unit 103 returns a strategy according to a preset strategy, and the service unit 101 performs further processing according to the strategy. The strategy processing is as follows 8.3.1 to 8.3.4.

In 8.3.1, strategy 1, an MO RPACK is delivered by using an IP/PORT of a call initiation S-CSCF.

In 8.3.2, strategy 2, the home S-CSCF is delivered by using an S-CSCF NAME in subscription information of an HSS.

The service unit 101 queries a DNS to acquire an IP by using the registration information S-CSCF NAME, and the service unit 101 uses the queried IP/PORT for delivery. The PORT preferably uses the PORT corresponding to the S-CSCF NAME, or if there is no PORT corresponding to the S-CSCF NAME, a PORT corresponding to a preset S-CSCF NAME is used. The service unit 101 synchronously updates registration information (S-CSCF IP, PORT, etc.) to the signaling cache unit 102.

In 8.3.3, strategy 3, MO RPACK is delivered by constructing I-CSCF from subscription information of an HSS.

The service unit 101 generates the I-CSCF NAME by using preset prefix plus registration information USERURI suffix, the service unit 101 initiates an SRV query to a DNS for the priority of a PORT corresponding to the S-CSCF NAME belonging to the I-CSCF, and the service unit 101 initiates an A/AAAA query to the DNS for an IP corresponding to the S-CSCF NAME. The service unit 101 selects an IP/PORT for delivery, and the rule of strategy selection is as follows: higher priority takes precedence, IPV6 is preferred for the same priority, and round-robin for the same type. The service unit 101 updates registration information (S-CSCF NAME, IP, PORT) to the signaling cache unit 102.

In 8.3.4, strategy 4, adaptive delivery: the adaptive decision unit 104 prioritizes an IP/PORT of a call initiation S-CSCF for delivery, it is switched to an S-CSCF NAME for delivery when the success rate of delivery is lower than a preset threshold, and it is switched to an I-CSCF for delivery when the success rate of delivery of a corresponding S-CSCF NAME is lower than the threshold again.
a. The service unit 101 triggers the adaptive decision unit 104 to deliver the MO RPACK.
b. The adaptive decision unit 104 prioritizes an IP/PORT of a call initiation S-CSCF for delivery, before delivery, the adaptive decision unit 104 queries the signaling cache unit 102 for the corresponding success rate of the call initiation S-CSCF, if it is higher than a threshold, it is delivered directly and the success rate is updated according to the delivery result. If it is not met, it is switched to an S-CSCF NAME for delivery, that is, the process c.
c. Delivery is performed based on an S-CSCF NAME.
c1. The adaptive decision unit 104 queries the signaling cache unit 102 for the corresponding success rate according to the registration information S-CSCF NAME, if the requirement is met, the adaptive decision unit 104 queries a DNS according to the S-CSCF NAME to acquire an IP; or if the success rate does not meet the requirement, it is switched to the process d.
c2. The adaptive decision unit 104 uses the queried IP/PORT for delivery. A PORT corresponding to the S-CSCF NAME in the registration information is preferably used, or if there is no PORT corresponding to the S-CSCF NAME, then a PORT corresponding to a preset S-CSCF NAME is used.
c3. The adaptive decision unit 104 updates the corresponding success rate of an S-CSCF-NAME according to the delivery result.
c4. If the delivery is successful, the adaptive decision unit 104 updates registration information (IP, PORT) to the signaling cache unit 102.
d. Delivery is performed based on an I-CSCF NAME.
d1. The adaptive decision unit 104 generates an I-CSCF NAME by using preset prefix plus registration information USERURI suffix, the adaptive decision unit 104 initiates an SRV query to a DNS for the priority of a PORT corresponding to the S-CSCF NAME under the I-CSCF, and the adaptive decision unit 104 initiates an A/AAAA query to the DNS for an IP corresponding to the S-CSCF NAME.
d2. The adaptive decision unit 104 selects an IP/PORT for delivery, and the rule of strategy selection is as follows: after the S-CSCF whose success rate does not meet the threshold is eliminated, higher priority takes precedence, IPV6 is preferred for the same priority, and round-robin for the same type.
d3. The adaptive decision unit 104 updates the corresponding success rate of an S-CSCF-NAME according to the delivery result.
d4. The adaptive decision unit 104 updates registration information (S-CSCF NAME, IP, PORT priority) to the signaling cache unit 102.

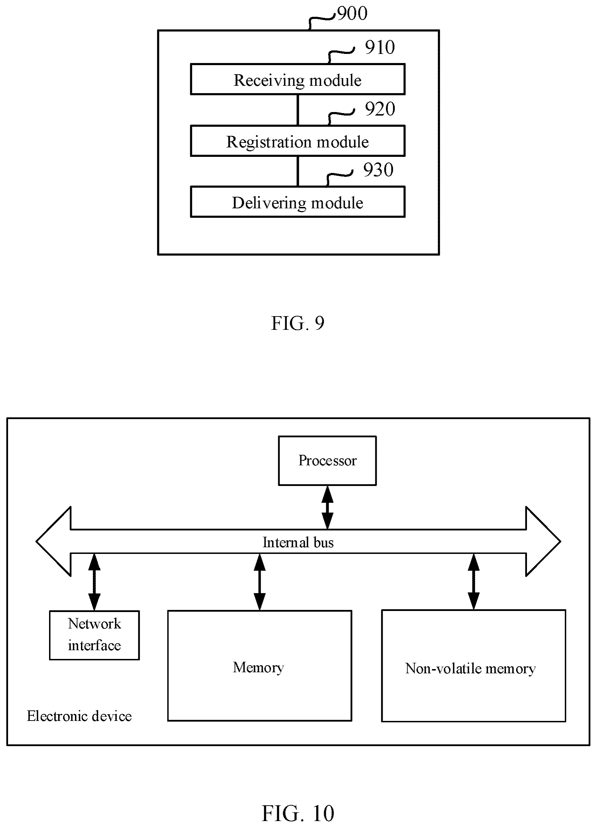

In another aspect, an embodiment of the present application further provides a call initiation processing apparatus. FIG. 9 is a schematic structural diagram of a call initiation processing apparatus 900, which includes a receiving module 910, a registration module 920 and a delivering module 930.

The receiving module 910 configured to receive a call initiation message from a UE, wherein the call initiation message indicates a call initiation S-CSCF and an S-CSCF address of the call initiation S-CSCF.

The registration module 920 is configured to determine, if an S-CSCF address registered by the UE is not stored locally and a success rate of delivering a message by the call initiation S-CSCF indicated by the call initiation message reaches a first preset threshold, the S-CSCF address of the call initiation S-CSCF as the S-CSCF address registered by the UE, or configured to determine, if the S-CSCF address registered by the UE is not stored locally and a success rate of delivering a message by the call initiation S-CSCF does not reach a first preset threshold, an S-CSCF address of an associated S-CSCF in subscription information of the UE in an HSS as the S-CSCF address registered by the UE.

The delivering module 930 is configured to deliver a response message corresponding to the call initiation message according to the S-CSCF address registered by the UE.

Based on the apparatus according to embodiments of the present application, after an IP-SM-GW receives the call initiation message sent by the UE, if it is determined that the S-CSCF address registered by the UE is not stored locally, then the success rate of delivering a message by the call initiation S-CSCF is determined. If the success rate of delivering a message by the call initiation S-CSCF reaches a first preset threshold, the problem of inconsistency between uplink and downlink monitoring ports can be ruled out, then the S-CSCF address of the call initiation S-CSCF indicated by the call initiation message is determined as the S-CSCF address registered by the UE, such that the call initiation S-CSCF is responsible for delivering a response message corresponding to the call initiation message. If the success rate of delivering a message by the call initiation S-CSCF reaches a second preset threshold, the S-CSCF address of another associated S-CSCF in subscription information of the UE in an HSS is determined as the S-CSCF address registered by the UE, such that the other associated S-CSCF is responsible for delivering a response message corresponding to the call initiation message. The solution of embodiments of the present application can be used ensure normal call initiation of 4G/5G short messages when the registration information of the primary IP-SM-GW is abnormal, as well as in a process of switching between the primary and standby IP-SM-GWs, thereby improving the robustness of call initiation of an IP-SM-GW.

Optionally, prior to that the registration module 920 determines an S-CSCF address of an associated S-CSCF in subscription information of the UE in an HSS as the S-CSCF address registered by the UE, the apparatus is further used to: determine an S-CSCF associated with the UE from subscription information of the UE in the HSS; and query a DNS for an S-CSCF address of the S-CSCF associated with the UE, wherein a queried S-CSCF address is used as the S-CSCF address of the associated S-CSCF from the subscription information of the UE.

Optionally, prior to that the registration module 920 determines an S-CSCF address of an associated S-CSCF in subscription information of the UE in an HSS as the S-CSCF address registered by the UE, the apparatus is further used to: acquire a user identifier corresponding to the UE from the subscription information of the UE in the HSS; determine an I-CSCF associated with the UE based on the user identifier corresponding to the UE; and query a DNS for an S-CSCF address of an S-CSCF belonging to one I-CSCF group in an I-CSCF POOL, wherein a queried S-CSCF address is used as the S-CSCF address of the associated S-CSCF in the subscription information of the UE.

Optionally, the registration module 920 queries a DNS for an S-CSCF address of an S-CSCF belonging to one I-CSCF group in an I-CSCF POOL includes: querying the DNS for an S-CSCF address of an S-CSCF with a highest priority belonging to one I-CSCF group in the I-CSCF POOL.

Optionally, name information of an I-CSCF associated with the UE consists of a preset prefix and a user identifier corresponding to the UE.

Optionally, prior to that the registration module 920 determines an S-CSCF address of an associated S-CSCF in subscription information of the UE in an HSS as the S-CSCF address registered by the UE, the apparatus is further used to: determine both an S-CSCF associated with the UE and a user identifier corresponding to the UE from subscription information of the UE in an HSS; if the success rate of delivering a message by the S-CSCF associated with the UE reaches a second preset threshold, query a DNS for an S-CSCF address of an S-CSCF associated with the UE, wherein a queried S-CSCF address is used as the S-CSCF address of the associated S-CSCF from the subscription information of the UE; or if a success rate of delivering a message by the S-CSCF associated with the UE does not reach a second preset threshold, determine an I-CSCF associated with the UE based on the user identifier corresponding to the UE, and query a DNS for an S-CSCF address of an S-CSCF belonging to one I-CSCF group in an I-CSCF POOL, wherein a queried S-CSCF address is used as an S-CSCF address of the associated S-CSCF in the subscription information of the UE.

Optionally, if that an S-CSCF address registered by the UE is not stored locally, that a success rate of delivering a message by the call initiation S-CSCF indicated by the call initiation message does not reach a first preset threshold, and that an S-CSCF address of the associated S-CSCF fails to be determined from subscription information of the UE in an HSS, then the S-CSCF address of the call initiation S-CSCF is determined as the S-CSCF address registered by the UE.

Obviously, the call initiation apparatus shown in FIG. 9 may be used to perform the method shown in FIG. 1, and can thus implement the steps and corresponding functions of the method shown in FIG. 1. Since the principles are the same, it will not be repeated in detail herein.

FIG. 10 is a schematic structural diagram of an electronic device according to an embodiment of the present application. Referring to FIG. 10, at the hardware level, the electronic device includes a processor, and optionally, an internal bus, a network interface, and a memory. The memory may include an internal memory, for example a high-speed random access memory (RAM), and may also include a non-volatile memory (non-volatile memory), such as at least one disk storage, etc. Of course, the electronic device may also include hardware required for other services.

The processor, network interface and memory may be interconnected by an internal bus, which may be an Industry Standard Architecture (ISA) bus, a Peripheral Component Interconnect (PCI) bus or an Extended Industry Standard Architecture (EISA) bus, etc. The bus may be divided into an address bus, a data bus, a control bus, etc. For ease of representation, only one bidirectional arrow is used in FIG. 10, but it does not mean that there is only one bus or one type of bus.

The memory is used to store the program. In some cases, the program may include program codes, and the program codes include computer operation instructions. The memory may include an internal memory and a non-volatile memory, and provides instructions and data to the processor.

Optionally, the processor reads corresponding computer program from the non-volatile memory into the memory and then runs it, forming the call initiation apparatus shown in FIG. 9. Correspondingly, the processor executes the program stored in the memory and is specifically used to execute the following operations: receiving a call initiation message sent from a UE, wherein the call initiation message indicates a call initiation S-CSCF and an S-CSCF address of the call initiation S-CSCF; if an S-CSCF address registered by the UE is not stored locally and a success rate of delivering a message by the call initiation S-CSCF indicated by the call initiation message reaches a first preset threshold, determining the S-CSCF address of the call initiation S-CSCF as the S-CSCF address registered by the UE, or if the S-CSCF address registered by the UE is not stored locally and a success rate of delivering a message by the call initiation S-CSCF does not reach a first preset threshold, determining an S-CSCF address of an associated S-CSCF in subscription information of the UE in an HSS as the S-CSCF address registered by the UE; and delivering a response message corresponding to the call initiation message according to the S-CSCF address registered by the UE.

Based on the electronic device according to embodiments of the present application, after the IP-SM-GW receives the call initiation message sent by the UE, if it is determined that the S-CSCF address registered by the UE is not stored locally, then the success rate of delivering a message by the call initiation S-CSCF is determined. If the success rate of delivering a message by the call initiation S-CSCF reaches a first preset threshold, the problem of inconsistency between uplink and downlink monitoring ports can be ruled out, then the S-CSCF address of the call initiation S-CSCF indicated by the call initiation message is determined as the S-CSCF address registered by the UE, such that the call initiation S-CSCF is responsible for delivering a response message corresponding to the call initiation message. If the success rate of delivering a message by the call initiation S-CSCF reaches a second preset threshold, the S-CSCF address of another associated S-CSCF in subscription information of the UE in an HSS is determined as the S-CSCF address registered by the UE, such that this another associated S-CSCF is responsible for delivering a response message corresponding to the call initiation message. The solution of embodiments of the present application can ensure normal call initiation of 4G/5G short messages when the registration information of the primary IP-SM-GW is abnormal, as well as in a process of switching between the primary and standby IP-SM-GWs, thereby improving the robustness of call initiation of an IP-SM-GW.

The call initiation method disclosed in embodiments of the present application may be applied to a processor and implemented by a processor. The processor may be an integrated circuit chip with signal processing capabilities. In the implementation process, each step of the above method may be completed by an integrated logic circuit in the form of hardware in the processor or an instruction in the form of software. The above processor may be a general-purpose processor, including a central processing unit (CPU), a network processor (NP), etc.; it may also be a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a storage medium well-known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

In addition to software implementation methods, the electronic device of the present application does not exclude other implementation methods, such as logic devices or a combination of software and hardware, etc., that is, the execution subject of the following processing flow is not limited to each logic unit, but may also be hardware or logic devices.

In addition, an embodiment of the present application further proposes a computer-readable storage medium, the computer-readable storage medium stores one or more programs, and the one or more programs store instructions.

Optionally, when the above-mentioned instructions are executed by a portable electronic device including a plurality of applications, the portable electronic device can execute the steps of the method shown in FIG. 1, including: receiving a call initiation message sent from a UE, wherein the call initiation message indicates a call initiation S-CSCF and an S-CSCF address of the call initiation S-CSCF; if an S-CSCF address registered by the UE is not stored locally and a success rate of delivering a message by the call initiation S-CSCF indicated by the call initiation message reaches a first preset threshold, determining the S-CSCF address of the call initiation S-CSCF as the S-CSCF address registered by the UE, or if the S-CSCF address registered by the UE is not stored locally and a success rate of delivering a message by the call initiation S-CSCF does not reach a first preset threshold, determining an S-CSCF address of an associated S-CSCF in subscription information of the UE in an HSS as the S-CSCF address registered by the UE; and delivering a response message corresponding to the call initiation message according to the S-CSCF address registered by the UE.

It should be understood by those skilled in the art that the embodiments of this specification may be provided as a method, system or computer program product. Therefore, this specification may take the form of a complete hardware embodiment, a complete software embodiment or an embodiment combining both software and hardware. Moreover, this specification may take the form of a computer program product implemented on one or more computer-usable storage media (including but not limited to disk storage, CD-ROM, optical storage, etc.) containing computer-usable program code.

Specific embodiments of the present specification are described above. Other embodiments are within the scope of the appended claims. In some cases, the actions or steps recorded in the claims may be performed in an order different from that in the embodiments and still achieve the desired results. In addition, the processes depicted in the accompanying drawings do not necessarily require a specific order or continuous order shown to achieve the desired results. In some embodiments, multitasking and parallel processing are also possible or may be advantageous.

The above are merely embodiments of the present specification and are not intended to limit the present specification. Those skilled in the art will appreciate that, various modification and alteration can be made to the present specification. Any modification, equivalent replacement, improvement, etc., that is made within the spirit and principle of the present specification should be included within the scope of the claims of the present specification. In addition, all other embodiments obtained by a person skilled in the art without creative work shall fall within the scope of the present document.

## Claims

1. A call initiation processing method, performed by an IP-SM-GW, comprising:
receiving a call initiation message from a UE, wherein the call initiation message indicates a call initiation S-CSCF and an S-CSCF address of the call initiation S-CSCF;
determining, upon the condition that an S-CSCF address registered by the UE is not stored locally and a success rate of delivering a message by the call initiation S-CSCF indicated by the call initiation message reaches a first preset threshold, the S-CSCF address of the call initiation S-CSCF as the S-CSCF address registered by the UE; or determining, upon the condition that the S-CSCF address registered by the UE is not stored locally and a success rate of delivering a message by the call initiation S-CSCF does not reach a first preset threshold, an S-CSCF address of an associated S-CSCF in subscription information of the UE in an HSS as the S-CSCF address registered by the UE; and
delivering a response message corresponding to the call initiation message according to the S-CSCF address registered by the UE.

2. The method according to claim 1, wherein prior to determining the S-CSCF address of the associated S-CSCF in the subscription information of the UE in the HSS as the S-CSCF address registered by the UE, the method further comprises:
determining an S-CSCF associated with the UE from the subscription information of the UE in the HSS; and
querying a DNS for an S-CSCF address of the S-CSCF associated with the UE, wherein a queried S-CSCF address is used as the S-CSCF address of the associated S-CSCF in the subscription information of the UE.

3. The method according to claim 1, wherein
prior to determining the S-CSCF address of the associated S-CSCF in the subscription information of the UE in the HSS as the S-CSCF address registered by the UE, the method further comprises:
acquiring a user identifier corresponding to the UE from the subscription information of the UE in the HSS;
determining an I-CSCF associated with the UE based on the user identifier corresponding to the UE; and
querying a DNS for an S-CSCF address of an S-CSCF belonging to one I-CSCF group in an I-CSCF POOL, wherein a queried S-CSCF address is used as the S-CSCF address of the associated S-CSCF in the subscription information of the UE.

4. The method according to claim 3, wherein querying the DNS for the S-CSCF address of the S-CSCF belonging to one I-CSCF group in the I-CSCF POOL comprises:
querying the DNS for an S-CSCF address of an S-CSCF with a highest priority belonging to one I-CSCF group in the I-CSCF POOL.

5. The method according to claim 3, wherein name information of the I-CSCF associated with the UE comprises a preset prefix and a user identifier corresponding to the UE.

6. The method according to claim 1, wherein prior to determining the S-CSCF address of the associated S-CSCF in the subscription information of the UE in the HSS as the S-CSCF address registered by the UE, the method further comprises:
determining both an S-CSCF associated with the UE and a user identifier corresponding to the UE from the subscription information of the UE in the HSS; and
querying, upon the condition that a success rate of delivering a message by the S-CSCF associated with the UE reaches a second preset threshold, a DNS for an S-CSCF address of an S-CSCF associated with the UE, wherein a queried S-CSCF address is used as the S-CSCF address of the associated S-CSCF in the subscription information of the UE; or
determining, upon the condition that a success rate of delivering a message by the S-CSCF associated with the UE does not reach a second preset threshold, an I-CSCF associated with the UE based on the user identifier corresponding to the UE, and querying a DNS for an S-CSCF address of an S-CSCF belonging to one I-CSCF group in an I-CSCF POOL, wherein a queried S-CSCF address is used as an S-CSCF address of the associated S-CSCF in the subscription information of the UE.

7. The method according to claim 1, wherein determining, upon the condition that the S-CSCF address registered by the UE is not stored locally, that the success rate of delivering a message by the call initiation S-CSCF indicated by the call initiation message does not reach the first preset threshold, and that the S-CSCF address of the associated S-CSCF fails to be determined from the subscription information of the UE in the HSS, the S-CSCF address of the call initiation S-CSCF as the S-CSCF address registered by the UE.

8. A call initiation processing apparatus, comprising:
a receiving module, configured to receive a call initiation message from a UE, wherein the call initiation message indicates a call initiation S-CSCF and an S-CSCF address of the call initiation S-CSCF;
a registration module, configured to determine, upon the condition that an S-CSCF address registered by the UE is not stored locally and a success rate of delivering a message by the call initiation S-CSCF indicated by the call initiation message reaches a first preset threshold, determine the S-CSCF address of the call initiation S-CSCF as the S-CSCF address registered by the UE; or determine, upon the condition that the S-CSCF address registered by the UE is not stored locally and a success rate of delivering a message by the call initiation S-CSCF does not reach a first preset threshold, an S-CSCF address of an associated S-CSCF associated in subscription information of the UE in an HSS as the S-CSCF address registered by the UE; and
a delivering module, configured to deliver a response message corresponding to the call initiation message according to the S-CSCF address registered by the UE.

9. An electronic device, comprising: a processor, and a memory configured to store computer-executable instructions, wherein the computer-executable instructions, when executed, enable the processor to execute the method of any one of claims 1-7.

10. A computer-readable storage medium configured to store computer-executable instructions, wherein the computer-executable instructions, when executed by a processor, implement the method of any one of claims 1-7.
